# EUROPÄISCHE PATENTSCHRIFT

(11) **EP 1 032 102 B1**
(45) Veröffentlichungstag und Bekanntmachung des Hinweises auf die Patenterteilung: **07.05.2003**
(21) Anmeldenummer: 00101650.0
(22) Anmeldetag: 01.02.2000
(51) Int. Cl.: H02G 3/04, H04Q 1/14, H02G 3/08

(54) **Verteilereinrichtung**
Distributor
Dispositif de distribution

(30) Priorität: 26.02.1999 DE 29903518 U
(43) Veröffentlichungstag der Anmeldung: 30.08.2000
(60) Teilanmeldung: 02023618.8
(73) Patentinhaber: QUANTE AG, 42109 Wuppertal (DE)
(72) Erfinder: Denter, Friedrich Wilhelm, 44575 Castrop-Rauxel (DE); Schlüter, Dieter, 46284 Dorsten (DE)
(74) Vertreter: HOFFMANN - EITLE

(56) Entgegenhaltungen:
- EP-A- 0 204 675
- EP-A- 0 647 072
- DE-A- 2 901 766
- DE-C- 19 537 529
- US-A- 4 581 489

## Beschreibung

### Gebiet der Erfindung

Die Erfindung betrifft eine Verteilereinrichtung für Kabeladern, insbesondere Fernmelde-, Signal- oder Steuerkabel, mit den Merkmalen des Oberbegriffs des Anspruchs 1.

Verteilereinrichtungen besitzen die Aufgabe, zahlreiche Kabeladern in einer gewünschten, individuellen Weise zu verlegen, anzuschließen und miteinander zu kontaktieren bzw. zu trennen.

### Stand der Technik

In der Technik weit verbreitete Verteilereinrichtungen werden als Drahtführungsscheiben ausgeführt und in abwechselnder Reihenfolge mit Anschlußleisten auf die Längswände einer Montagewanne aufgesteckt oder aufgerastet. Hierzu besitzen die Drahtführungsscheiben Haltemittel, die mit Befestigungsansätzen, beispielsweise Zungen oder Schlitzen, der Montagewanne zusammenwirken.

Aus der EP 0 647 072 A2 ist eine Verteilereinrichtung bekannt, bei der ein Paar von Drahtführungsscheiben gemeinsam ein kastenförmiges Gehäuse aus formgleich gestalteten Gehäusehälften bilden. Somit besitzt das Gehäuse erste Drahtführungskanäle, die von der einen Seite des Gehäuses zur Vorderseite verlaufen sowie zweite Drahtführungskanäle, die von der entgegengesetzten Seite des Gehäuses zur Vorderseite verlaufen. Die ersten wie auch zweiten Drahtführungskanäle sind bogenförmig gestaltet und dienen dem Hindurchfädeln der Drähte bzw. Kabeladern.

Die einzelnen Drahtführungskanäle besitzen definierte Abmessungen bezüglich der Breite und Höhe, die auf die üblichen Kabeladern abgestimmt sind. Häufig kommen jedoch auch dickere Kabeladern zum Einsatz, die entweder einer auf der Verteileinrichtung aufgerasteten Verbindungsleiste zugeführt, oder von dieser abgeführt werden sollen. Für diesen Fall werden Verteilereinrichtungen eingesetzt, die aus zueinander formgleich gestalteten Gehäusehälften mit Drahtführungskanälen größerer Abmessungen gebildet sind.

Die DE 29 01 766 A1 beschreibt einen Trennverteiler für elektrische Anlagen, insbesondere Fernsprechanlagen mit einem Gehäuse, an dem an entgegengesetzten Seiten ausgehend von zueinander entgegengesetzten Seiten Drahtführungskanäle jeweils zur Vorderseite des Verteilers verlaufen.

### Darstellung der Erfindung

Der Erfindung liegt die Aufgabe zugrunde, eine Verteilereinrichtung für Kabeladern vorzuschlagen, die gericht unterschiedliche Kabeladern und Kabeldurchmesser aufnehmen kann. Diese Aufgabe wird mit einer Verteilereinrichtung für Kabeladern mit den Merkmalen des Anspruchs 1 gelöst.

Der Erfindung liegt der Gedanke zugrunde, eine Verteilereinrichtung mit ersten und zweiten Drahtführungskanälen vorzusehen, wobei die ersten Drahtführungskanäle einen größeren Durchtrittsquerschnitt aufweisen als die zweiten Drahtführungskanäle. Hierdurch wird es möglich, gezielt von der einen Seite des Gehäuses der Verteilereinrichtung dickere Kabeladern einzuführen, während auf der entgegengesetzten Seite des Gehäuses weiterhin Kabeladern mit kleinem Durchmesser in die Drahtführungskanäle mit geringeren Durchtrittsquerschnitten eingeführt werden.

Das Gehäuse ist somit nicht aus formgleich gestalteten Gehäusehälften gebildet, sondern ein Gehäuse, das große Kanäle auf der einen Seite und auf der anderen Seite kleine Kanäle miteinander kombiniert. Diese Gestaltung des Gehäuses besitzt den Vorteil, dass einerseits ausreichend große Kanäle zum Durchführen von Kabeladern mit großem Kabeldurchmesser vorhanden sind, andererseits bei der Führung von Kabeladern mit geringem Kabeldurchmesser kein Platz verschenkt wird.

Vorteilhafte Ausführungsformen der Erfindung sind durch die übrigen Ansprüche gekennzeichnet.

So besitzen nach einer bevorzugten Ausführungsform der Erfindung die ersten Drahtführungskanäle und/oder die zweiten Drahtführungskanäle einen bogenförmigen Verlauf. Da die Austrittsöffnungen der Drahtführungskanäle im Gehäuse der Verteilereinrichtung jeweils an der **Vorderseite** und einer Seite des Gehäuses liegen, muss im Längsverlauf des Drahtführungskanals zwischen den beiden Austrittsöffnungen eine Richtungsänderung stattfinden, die verschiedene Geometrien besitzen kann. Ein bogenförmiger Verlauf stellt für das Durchfädeln der Kabeladern eine harmonische Form der Richtungsänderung dar.

Nach einer bevorzugten Ausführungsform der Erfindung umfasst die Verteilereinrichtung weiterhin Befestigungseinrichtungen, die sich an der Rückseite des Gehäuses befinden und zur Anbringung auf einer Montagewanne dienen. Hierdurch lässt sich die Verteilereinrichtung fest auf der Montagewanne anbringen und lagefixieren.

Vorzugsweise umfasst die Verteilereinrichtung weiterhin Haltemittel zur Anbringung einer Anschlussleiste. Dies gestattet gemeinsam mit der Befestigungseinrichtung zur Anbringung auf einer Montagewanne einen festen Verbund zwischen der Anschlussleiste und der Montagewanne.

Vorzugsweise umfasst die Verteilereinrichtung weiterhin zahnförmige Abstufungen im Öffnungsbereich des ersten Drahtführungskanals und/oder des zweiten Drahtführungskanals. Diese zahnförmigen Abstufungen dienen als Einführhilfe im Bereich der Eintrittsöffnungen für die durch die Drahtführungskanäle hindurchzufädelnden Kabeladern.

Nach einer bevorzugten Ausführungsform besitzen die Drahtführungskanäle einen linearen Einführbereich und/oder einen linearen Ausführbereich. Diese spezielle Geometrie mit linearen Ein- und Ausführbereichen und einem-sich jeweils tangential an die linearen Bereiche anschließenden Bogen mit konstantem Krümmungsradius bildet eine besonders geeignete Geometrie, um das Durchfädeln von Kabeladern oder Aderpaaren zu erleichtern.

Vorzugweise ist der Winkel zwischen der Einführrichtung und der Ausführrichtung größer als 90°, vorzugsweise zwischen 95° und 110°. Dies berücksichtigt die Richtung der kabelseitig ankommenden Kabeladern, die leicht von unten her in die Verteilereinrichtung eingeführt werden. Durch die Wahl des Winkels zwischen der Einführrichtung und der Ausführrichtung größer als 90° wird somit ein besonders harmonischer Verlauf der Kabeladern und Aderpaare erzielt.

Nach einer bevorzugten Ausführungsform vergrößert sich die Querschnittsfläche der Drahtführungskanäle von der Seite des Gehäuses zur Vorderseite des Gehäuses hin. Jedoch wird das Einführen von Kabeladern erleichtert, indem aufgrund der sich vergrößernden Querschnittsfläche während des fortschreitenden Einführens ein Knicken und Klemmen der Kabeladern behindert wird, indem fortschreitend mehr Raum für die durchzufädelnden Kabeladern zur Verfügung steht. Darüber hinaus wird der Kontakt zwischen den einzuführenden Kabeladern mit den Wandungen der Drahtführungskanäle verringert, wodurch sich die Reibung verringert und das Einführen weiter erleichtert wird.

### Kurze Beschreibung der Zeichnungen

Nachfolgend wird die Erfindung rein beispielhaft anhand der beigefügten Figuren beschrieben, in denen:
- Fig. 1: einen Schnitt durch die Drahtführungskanäle einer Verteilereinrichtung zeigt; und
- Fig. 2 und 3: jeweils perspektivische Seitenansichten der erfindungsgemäßen Verteilereinrichtung darstellen.

### Wege zur Ausführung der Erfindung

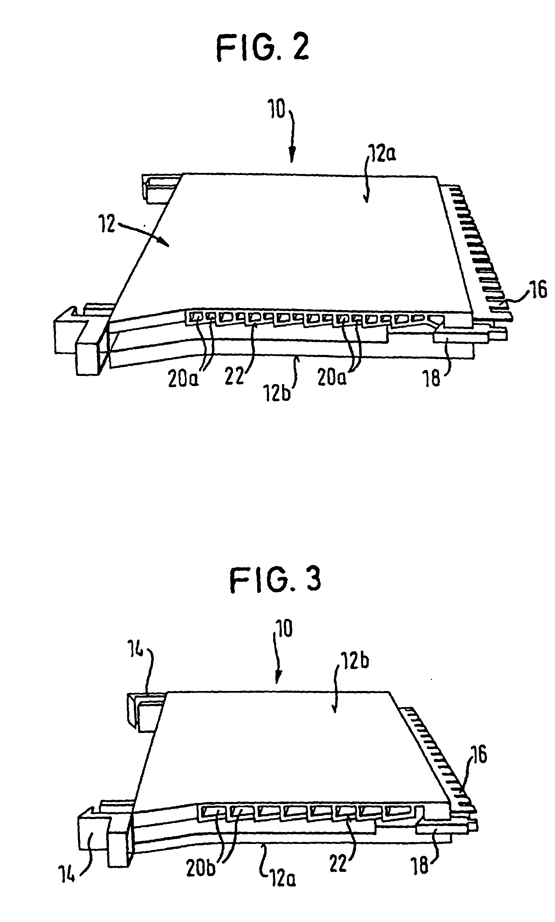

In den Figuren 2 und 3 ist jeweils eine perspektivische Ansicht der Verteilereinrichtung 10 von unterschiedlichen Seiten dargestellt. Dies bedeutet, dass die in Fig. 2 oben dargestellte Seitenfläche 12a des Gehäuses 12 in Fig. 3 nicht sichtbar ist und anstelle dessen die entgegengesetzt gerichtete Seitenfläche 12b in Fig. 3 oben liegt.

Die Verteilereinrichtung 10 weist Befestigungseinrichtungen 14 an der **Rückseite** auf, die der Befestigung auf Halteschienen oder einer Montagewanne dienen.

Die Geometrie der Befestigungseinrichtungen 14 ist für das Verständnis und Wesen der Erfindung unerheblich, da lediglich durch die Befestigungseinrichtungen sichergestellt werden soll, dass die Verteilereinrichtung 10 auf einem geeigneten Profil, z.B. einer Montagewanne, befestigbar, vorzugsweise aufrastbar ist.

An der **Vorderseite** der Verteilereinrichtung ist eine Anschlussleiste 16 abgebildet. Diese wird auf der **Vorderseite** der Verteilereinrichtung 10 aufgesteckt, wobei die in Fig. 2 und 3 dargestellten Rasthaken 18 der Anschlussleiste mit entsprechenden Haltemitteln der Verteilereinrichtung zusammenwirken.

An den jeweiligen Seiten der in den Fig. 2 und 3 gezeigten Verteilereinrichtung befinden sich Öffnungen 20a, 20b, die dem Eintritt bzw. Austritt von Kabeladern dienen. Wie aus einem Vergleich der Fig. 2 und 3 ersichtlich ist, besitzen die in der Ansicht gemäß Fig. 2 sichtbaren Öffnungen 20a jeweils eine geringere Querschnittsfläche als die in der Ansicht gemäß Fig. 3 sichtbaren Öffnungen 20b. Somit ist die in den Fig. 2 und 3 dargestellte Verteilereinrichtung nicht aus formgleichen Gehäusehälften gebildet, sondern mit unterschiedlichen Draht führungskanälen ausgestattet, deren Querschnitt über den Verlauf annähernd konstant bleibt und deren öffnungsquerschnitte 20a, 20b in den Fig. 2 und 3 dargestellt sind.

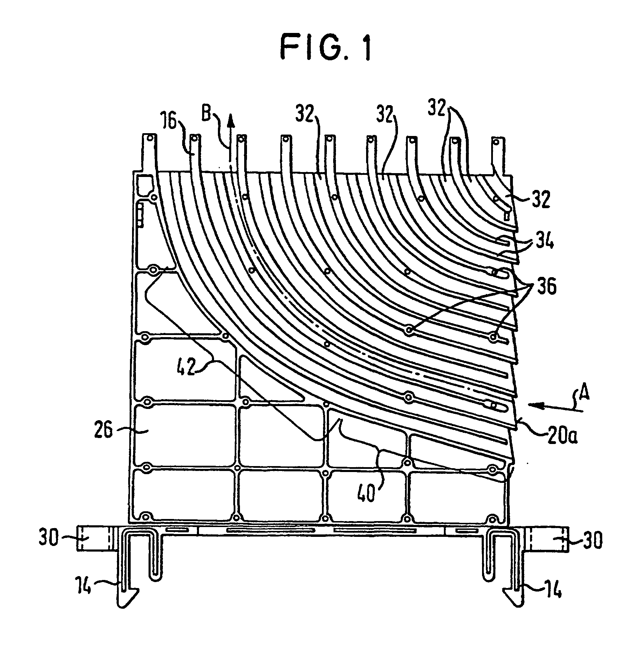

Die in Fig. 1 eingehender dargestellten Drahtführungskanäle verlaufen von den Öffnungen 20a, 20b entlang der Seitenkanten der Verteilereinrichtung bogenförmig zu Austrittsöffnungen auf der **Vorderseite**. Somit besitzen diese einen Verlauf, der beim Durchfädeln von Kabeladern eine Richtungsänderung um 90° der Kabeladern bewirkt.

Die sich an die in Fig. 3 ersichtlichen Öffnungen 20b anschließenden Drahtführungskanäle mit größerem Durchtrittsquerschnitt dienen dem Durchführen von Kabeladern mit größerem Querschnitt, während die in Fig. 2 im öffnungsbereich 20a dargestellten Drahtführungskanäle für Kabeladern mit geringeren Querschnittsabmessungen geeignet sind. Wie sich aus einem Vergleich der Fig. 2 und 3 ergibt, sind von der in Fig. 2 sichtbaren Seite der Verteilereinrichtung aus Doppelkanäle für Umschaltzwecke durch die Verteilereinrichtung geführt. Somit sind doppelt so viele Drahtführungskanäle von der in Fig. 2 sichtbaren Seite aus durch die Verteilereinrichtung geführt wie von der in Fig. 3 sichtbaren Seite. Somit kann bei der erfindungsgemäßen Verteilereinrichtung gezielt die Verwendung spezieller, dickerer Kabeladern oder Kabelpaare vorgesehen werden. Natürlich können auch dünnere Kabeladern eingeführt werden.

Wie weiterhin aus den Fig. 2 und 3 ersichtlich ist, sind zur Einführhilfe die Seitenkanten 22 im Bereich der in den Fig. 2 und 3 ersichtlichen Eintrittsöffnungen 20a, 20b mit zahnförmigen Stufungen versehen. Während auf der in Fig. 3 sichtbaren Seite die Stufungen jeweils nur über einen einzelnen Drahtführungskanal geführt sind, sind bei der in Fig. 2 sichtbaren Seitenkante die Stufungen jeweils über zwei benachbarte Drahtführungskanäle hinweggeführt. Über die Stufungen lässt sich auch bei schlechten Sichtverhältnissen die Lage der Öffnung eines gewünschten Drahtführungskanals leicht identifizieren.

In Fig. 1 ist das Wandteil 26 der Verteilereinrichtung mit den darin gebildeten, in der Darstellung nach Fig. 1 nach oben offenen Drahtführungskanälen 32 dargestellt. Die Drahtführungskanäle werden durch ein Zwischenwandteil geschlossen, so dass ein im wesentlichen rechteckiger Querschnitt der Drahtführungskanäle 32 resultiert. Das in Fig. 1 dargestellte Wandteil 26 gehört zu der Gehäusehälfte, deren Öffnungsseite in Fig. 2 dargestellt ist. Es sind insgesamt 16 Drahtführungskanäle 32 ersichtlich, von denen im Bereich der zahnförmigen Abstufungen jeweils zwei benachbarte Kanäle über eine Stufe hinweggeführt sind. Zwischen den Drahtführungskanälen 32 befinden sich Wandungen 34 zur seitlichen Begrenzung der einzelnen Draht führungskanäle und zum geordneten Zuführen der Kabeladern oder Aderpaare zu den Anschlussleisten oder Absätzen.

Zusätzlich sind in Fig. 1 Ösen 30 vorgesehen, die einerseits die ankommenden Kabeladern bzw. Aderpaare und andererseits die entsprechenden abgehenden Kabeladern bzw. Aderpaare bündeln und führen.

Anhand der Fig. 1 wird das Einführen eines Kabeladerpaares in die bogenförmig verlaufenden Drahtführungskanäle 32 erläutert. Hierbei wird eine einzuführende Kabelader oder ein Aderpaar (nicht dargestellt) in Pfeilrichtung A in die Öffnung 20a des Drahtführungskanals eingeschoben und entlang des strichpunktierten Verlaufes durch diesen hindurchgeschoben, bis das Kabel in Pfeilrichtung B aus der **Vorderseite** der Verteilereinrichtung austritt. Die Drahtführungskanäle können entlang ihres Verlaufes entweder einen bogenförmigen Verlauf mit gleichmäßigem Krümmungsradius besitzen, oder aber auch, wie in Fig. 1 dargestellt ist, zunächst einen im wesentlichen linearen Einlaufbereich 40, an den sich im weiteren Verlauf ein Bereich 42 mit gleichmäßigem Krümmungsradius anschließt. Die genaue Geometrie der Drahtführungskanäle richtet sich nach dem Erfordernis eines möglichst einfachen und unkomplizierten Einführens der Kabeladern oder Aderpaare durch die Drahtführungskanäle hindurch. Der Winkel zwischen der Einführrichtung (Pfeilrichtung A) und Ausführrichtung (Pfeil B) ist vorzugsweise größer als 90°.

Die erfindungsgemäße Verteilereinrichtung bietet den Vorteil, dass gezielt dickere Kabeladern mit dünneren Kabeladern kombiniert werden können, indem für die jeweils benötigten Kabelquerschnitte entsprechend dimensionierte Drahtführungskanäle vorgesehen sind.

## Patentansprüche

1. Verteilereinrichtung (10) für Kabel, insbesondere Fernmelde-, Signal- oder Steuerkabel, mit einem Gehäuse (12), das eine Vorderseite aufweist, wobei in dem Gehäuse
- erste Drahtführungskanäle von einer ersten Seite des Gehäuses (12) zur Vorderseite des Gehäuses verlaufen; und
- zweite Drahtführungskanäle von einer zweiten, zur ersten Seite entgegengesetzten Seite zur Vorderseite des Gehäuses verlaufen;
**dadurch gekennzeichnet, daß** die ersten Drahtführungskanäle einen größeren Durchtrittsquerschnitt (20b) aufweisen als die zweiten Drahtführungskanäle, wobei doppelt so viele zweite Drahtführungskanäle vorhanden sind als erste Drahtführungkanäle.

2. Verteilereinrichtung nach Anspruch 1,
**dadurch gekennzeichnet, daß** die ersten Drahtführungskanäle und/oder die zweiten Drahtführungskanäle einen bogenförmigen Verlauf besitzen.

3. Verteilereinrichtung nach Anspruch 1 oder 2, weiter umfassend Befestigungseinrichtungen (14), die sich an der Rückseite des Gehäuses (10) befinden und zur Anbringung auf einer Montagewanne dienen.

4. Verteilereinrichtung nach einem der Ansprüche 1 bis 3, weiter umfassend Haltemittel (18) zur Anbringung einer Anschlußleiste.

5. Verteilereinrichtung nach einem oder mehreren der Ansprüche 1 bis 4, weiter umfassend zahnförmige Abstufungen (22) im öffnungsbereich (20a, 20b) des ersten Drahtführungskanals und/oder des zweiten Drahtführungskanals.

6. Verteilereinrichtung nach einem der vorhergehenden Ansprüche,
**dadurch gekennzeichnet, daß**
die Drahtführungskanäle einen linearen Einführbereich (40) und/oder einen linearen Ausführbereich besitzen.

7. Verteilereinrichtung nach Anspruch 6,
**dadurch gekennzeichnet, daß**
der Winkel zwischen der Einführrichtung und der Ausführrichtung größer als 90°, vorzugsweise zwischen 95° und 110° ist.

8. Verteilereinrichtung nach einem der vorhergehenden Ansprüche,
**dadurch gekennzeichnet,daß**
sich die Querschnittsfläche der Drahtführungskanäle von der Seite des Gehäuses zur Vorderseite des Gehäuses vergrößert.

## Claims

1. A distributor (10) for cables, in particular telecommunications, signal or control cables, with a housing (12) which has a front side, wherein in the housing
- first wire guidance channels extend from a first side of the housing (12) to the front side of the housing; and
- second wire guidance channels extend from a second side, opposed to the first side, to the front side of the housing;
**characterised in that**
the first wire guidance channels have a larger passage cross-section (20b) than the second wire guidance channels, twice as many second wire guidance channels as first wire guidance channels being present.

2. A distributor according to Claim 1, **characterised in that** the path of the first wire guidance channels and/or the second wire guidance channels is arcuate.

3. A distributor according to Claim 1 or 2, further comprising fastening means (14) located on the rear side of the housing (10) and serving for attachment to a mounting tray.

4. A distributor according to one of Claims 1 to 3, further comprising holding means (18) for attaching a connecting bar.

5. A distributor according to one or more of Claims 1 to 4, further comprising tooth-like steps (22) in the opening region (20a, 20b) of the first wire guidance channel and/or the second wire guidance channel.

6. A distributor according to one of the preceding claims, **characterised in that** the wire guidance channels have a linear introduction region (40) and/or a linear exit region.

7. A distributor according to Claim 6, **characterised in that** the angle between the introduction direction and the exit direction is greater than 90°, preferably between 95° and 110°.

8. A distributor according to one of the preceding claims, **characterised in that** the cross-sectional surface area of the wire guidance channels increases from the side of the housing to the front side of the housing.

## Revendications

1. Dispositif de distribution (10) pour câbles, en particulier pour câbles de télétransmission, de signalisation ou de commande, avec un boîtier (12) présentant une face avant,
ledit boîtier contenant
- des premiers canaux de guidage de fil, qui s'étendent depuis un premier côté du boîtier (12) jusqu'à la face avant dudit boîtier ; et
- des seconds canaux de guidage de fil, qui s'étendent depuis un second côté opposé au premier côté précité jusqu'à la face avant du boîtier ;
**caractérisé en ce que** les premiers canaux de guidage de fil présentent une section transversale de passage (20b) supérieure à celle des seconds canaux de guidage de fil, le nombre de premiers canaux de guidage de fil étant égal au nombre de seconds canaux de guidage de fil.

2. Dispositif de distribution selon la revendication 1, **caractérisé en ce que** les premiers canaux de guidage de fil et/ou les seconds canaux de guidage de fil suivent une trajectoire en arc de cercle.

3. Dispositif de distribution selon la revendication 1 ou 2, comprenant en outre des dispositifs de fixation (14) situés sur la face arrière du boîtier (10) et servant au raccordement sur un boîtier de montage.

4. Dispositif de distribution selon l'une des revendications 1 à 3, comprenant en outre des moyens de maintien (18) pour raccorder une barrette de connexion.

5. Dispositif de distribution selon l'une au moins des revendications 1 à 4, comprenant en outre des gradins (22) en forme de dents dans la zone d'ouverture (20a, 20b) du premier canal de guidage de fil et/ou du second canal de guidage de fil.

6. Dispositif de distribution selon l'une des revendications précédentes, **caractérisé en ce que** les canaux de guidage de fil présentent une zone d'entrée linaire (40) et/ou une zone de sortie linéaire.

7. Dispositif de distribution selon la revendication 6, **caractérisé en ce que** l'angle entre la direction d'entrée et la direction de sortie est supérieur à 90° et de préférence compris entre 95° et 110°.

8. Dispositif de distribution selon l'une des revendications précédentes, **caractérisé en ce que** la section transversale des canaux de guidage de fil augmente depuis le côté du boîtier en direction de la face avant dudit boîtier.
